# EUROPÄISCHE PATENTANMELDUNG

(11) **EP 1 074 208 A1**
(43) Veröffentlichungstag der Anmeldung: **07.02.2001**
(21) Anmeldenummer: 99115422.0
(22) Anmeldetag: 04.08.1999
(51) Int. Cl.: A47J 31/40

(54) **Kaffeemaschine**

(71) Anmelder: WMF WÜRTTEMBERGISCHE METALLWARENFABRIK AG, 73309 Geislingen/Steige (DE)
(72) Erfinder: App, Manfred, 73312 Geislingen/Steige (DE); Arndt, Peter, 89134 Blaustein (DE); Grupp, Martin, 73550 Wissgoldingen (DE); Gussmann, Jochen, 73312 Geislingen (DE); Lustig, Wilfried, 73540 Heubach (DE); Riegert, Hermann, 89558 Treffelhausen (DE); Schützle, Bernd, 73344 Gruibingen (DE)
(74) Vertreter: Grünecker, Kinkeldey, Stockmair & Schwanhäusser Anwaltssozietät

(57) **Zusammenfassung**

Es wird eine Kaffeemaschine (1) mit einer Brüheinrichtung (6) beschrieben, die eine durch einen bewegbaren Deckel (8) verschließbare Brühkammer und eine mit dem Deckel verbundene Einfülleinrichtung (13) für Kaffeemehl aufweist. Um eine derartige Kaffeemaschine kompakter in der Bauweise, einfacher in der Konstruktion und funktionssicher auszubilden, wird vorgeschlagen, die Einfülleinrichtung mit dem Deckel durch eine Übertragungseinrichtung so zu koppeln, daß eine begrenzte Relativbewegung zwischen der Einfüllrichtung und dem Deckel möglich ist.

## Beschreibung

Die Erfindung bezieht sich auf eine Kaffeemaschine der im Oberbegriff von Anspruch 1 erläuterten Art.

Eine derartige Kaffeemaschine ist aus der EP-A-443 054 bekannt. Die bekannte Kaffeemaschine enthält eine Brüheinrichtung, die eine mit einem Deckel verschließbare Brühkammer aufweist. Der Deckel ist als Schlitten ausgebildet und geradlinig und horizontal über die Brühkammer hin- und herbewegbar. Die Bewegung des Schlittens wird über eine kompliziert herzustellende Kurvenführung gesteuert. Die Mitte des Schlittens ist als Schließdeckel ausgebildet und die in Hinbewegung vorlaufende Begrenzungsfläche als Abstreifer sowie die in Herbewegung vorlaufende Begrenzungsfläche als Leitfläche zum Einfüllen von Kaffeemehl. Die zum Dosieren von Kaffeemehl verwendete Dosiereinrichtung ist senkrecht oberhalb der Brüheinrichtung angeordnet, so daß das Kaffeemehl den gesamten freien Raum gemäß der vertikalen Höhe des Schlittens im freien Fall in die Brühkammer fallen muß. Um zu verhindern, daß Kaffeemehl daneben fällt, müßte eigentlich unter der Dosiereinrichtung ein Einfülltrichter angeordnet werden, der jedoch die Bauhöhe der Kaffeemaschine weiter erhöht. Darüber hinaus ist die Steuerung über die Nockenführung relativ kompliziert herzustellen, da durch eine geeignete Hin- und Herbewegung sichergestellt werden muß, daß die Leitfläche nicht über die gerade geöffnete Brühkammer gelangt, wenn gerade der Restdampf entweicht. Dieser würde an der Leitfläche kondensieren, so daß anschließend Kaffeemehl hängenbleibt. Außerdem steht nicht in jeder Kaffeemaschine der Platz für eine vollständige lineare Verschiebung des Schlittens zur Verfügung.

Der Erfindung liegt somit die Aufgabe zugrunde, eine Kaffeemaschine auf konstruktiv einfache Weise so auszugestalten, daß die Abmessungen reduziert und die Funktionssicherheit verbessert wird.

Die Aufgabe wird durch die im Anspruch 1 angegebenen Merkmale gelöst.

Durch die erfindungsgemäße Koppelung über die eine begrenzte Relativbewegung zulassende Übertragungseinrichtung wird zum einen die Verwendung eines Einfülltrichters möglich, ohne daß dadurch die Bauhöhe erhöht werden muß und zum anderen ergeben sich aus dieser Konstruktion die vielfältigsten Möglichkeiten, Deckel und Einfülltrichter so innerhalb der Kaffeemaschine anzuordnen, wie es der zur Verfügung stehende Platz erlaubt, ohne daß eine komplizierte und viele Bauteile erforderliche Steuerung notwendig wäre. Insbesondere erlaubt es die erfindungsgemäße Ausgestaltung, die Brühkammer auf konstruktiv einfache Weise so zu öffnen, daß sie abdampfen kann, bevor die Einfülleinrichtung in die Einfüllstellung verbracht wird.

Konstruktiv besonders einfach ist die Übertragungseinrichtung gemäß Anspruch 2.

Die Ansprüche 3 bis 5 beschreiben verschiedene Möglichkeiten, wie eine Relativbewegung zwischen dem Deckel und dem Einfülltrichter ausgebildet sein kann, wobei die Möglichkeiten gemeinsam oder alternativ vorgesehen werden können.

Besonders zweckmäßig ist es, wenn man den Deckel, wie dies bereits üblich ist, um eine Schwenkachse auf einer Kreisbahn verschwenkt und demgegenüber den Einfülltrichter in einer geradlinigen Führung verschiebt. Die in Anspruch 7 beschriebene Konstruktion mit dem am Deckel angeordneten Mitnehmer, der gemäß Anspruch 8 bevorzugt ein Arm ist, und der am Einfülltrichter angeordneten Anschlagfläche ist besonders einfach zu realisieren.

Durch die Ausgestaltung nach Anspruch 9 kann der erforderliche Bewegungsweg weiter verringert werden.

Konstruktiv besonders einfach ist die Lösung gemäß Anspruch 10. Außerdem wird mit dieser Ausgestaltung sichergestellt, daß Deckel und Einfülltrichter eng benachbart bleiben, so daß sich ihr Bewegungsweg nicht unnötig verlängert.

In der Ausgestaltung nach Anspruch 11 kann die Bewegung des Einfülltrichters gleichzeitig zum Abstreifen des verbrauchten Kaffeesatzes benutzt werden.

Anspruch 12 beschreibt ein besonders bevorzugtes Ausführungsbeispiel der erfindungsgemäßen Kaffeemaschine.

Ein Ausführungsbeispiel der erfindungsgemäßen Kaffeemaschine wird nachfolgend anhand der Zeichnungen näher erläutert. Es zeigen:
- Fig. 1: eine erfindungsgemäß ausgerüstete Kaffeemaschine in schematischer Darstellung, teilgeschnitten,
- Fig. 2: eine Draufsicht auf die Brüheinrichtung der erfindungsgemäßen Kaffeemaschine in Einfüllposition in schematischer Darstellung,
- Fig. 3: eine Draufsicht auf die Brüheinrichtung in Brühposition in schematischer Darstellung, und
- Fig. 4: eine Draufsicht auf die Brüheinrichtung in Abstreifposition in schematischer Darstellung.

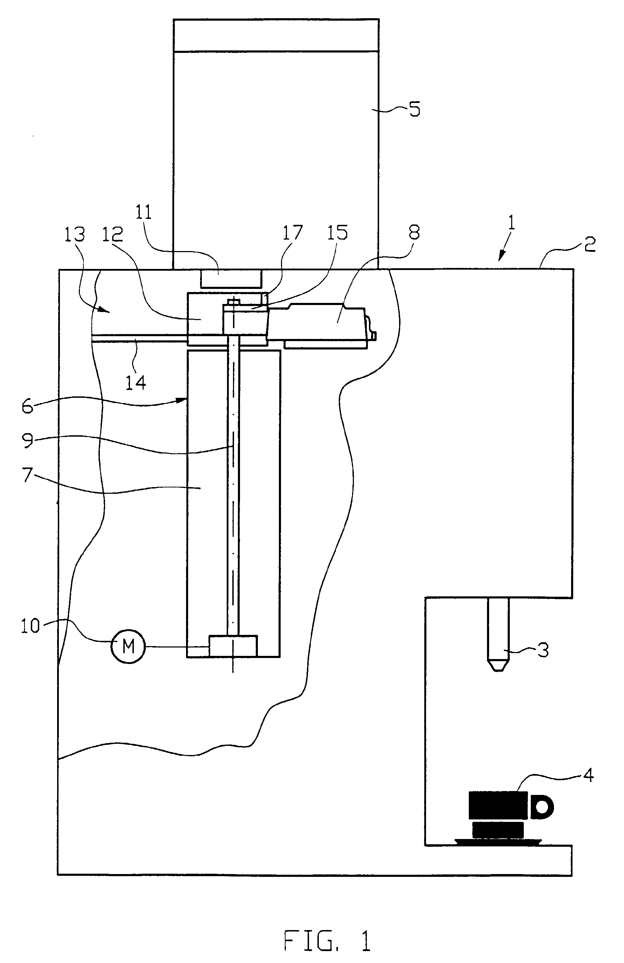

Fig. 1 zeigt in schematischer Darstellung eine erfindungsgemäße Kaffeemaschine 1, die in Form eines üblichen Kaffeeautomaten dargestellt ist. Die Kaffeemaschine 1 enthält ein Gehäuse 2 mit einem Kaffeeauslauf 3, unter dem ein Auffanggefäß, dargestellt ist eine Tasse 4, gestellt werden kann, sowie einen aufgesetzten Vorratsbehälter 5 für Kaffeemehl oder für Kaffeebohnen. Im letzteren Fall ist in den Vorratsbehälter eine nicht gezeigte Kaffeemühle integriert.

Das Gehäuse 2 umschließt die für Kaffeemaschinen üblichen, hier nicht dargestellten Bauteile, wie beispielsweise einen Heißwasserbereiter, eine Steuerung mit den, ebenfalls nicht dargestellten, vom Benutzer zu betätigenden Bedienelemente und dgl., sowie eine in Fig. 1 nur schematisch dargestellte Brüheinrichtung 6. Die Brüheinrichtung 6 enthält einen eine Brühkammer umschließenden Brühzylinder 7, der im dargestellten Ausführungsbeispiel als Rechteckzylinder ausgebildet ist, jedoch auch ein Kreiszylinder sein kann. Der Brühzylinder 7 ist senkrecht angeordnet und wird an seiner unteren Stirnseite durch einen ebenfalls üblichen und nicht dargestellten, verschiebbaren Kolben verschlossen, durch den das fertige Kaffeegetränk zum Auslauf 3 geleitet werden kann. Die nach oben weisende Stirnseite des Brühzylinders 7 wird durch einen Deckel 8 verschlossen, der um eine Schwenkachse 9 in Form einer Stange zwischen der in Fig. 1 dargestellten Offenposition in eine Schließposition verschwenkbar ist. Der Schwenkantrieb erfolgt über einen ebenfalls nur schematisch dargestellten Motor 10.

Der Vorratsbehälter 5 sitzt mit seiner Dosiereinrichtung 11 senkrecht oberhalb des Brühzylinders 7, wobei der Abstand zwischen der Oberseite des Brühzylinders 7 und der Unterseite der Dosiereinrichtung 11 so bemessen ist, daß ein Einfülltrichter 12 einer Einfülleinrichtung 13 gerade Platz hat.

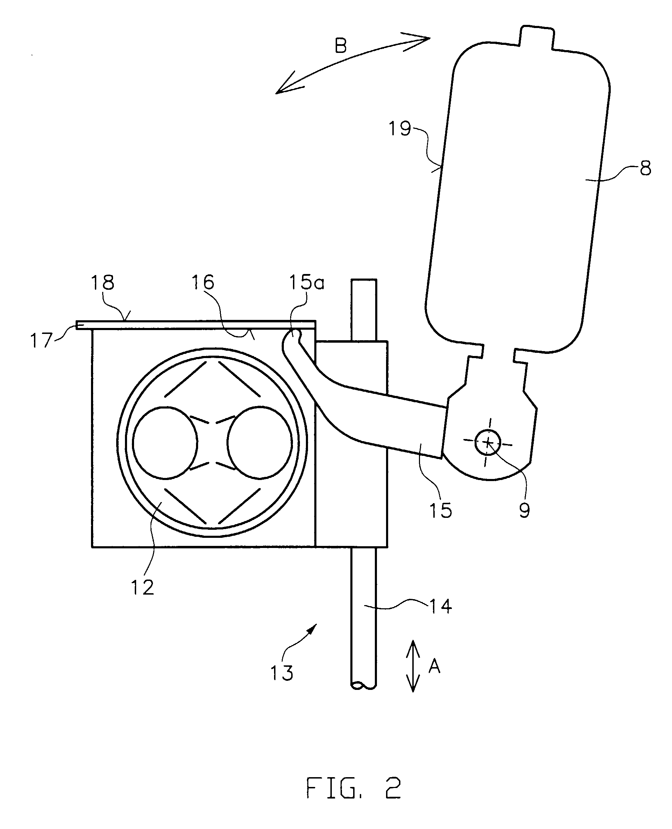

Fig. 2 zeigt in schematischer, vergrößerter Darstellung eine Draufsicht auf die Brüheinrichtung 6 gemäß Fig. 1. Gut zu sehen ist hier, daß der Einfülltrichter 12 auf einer Führungsstange 14 sitzt, auf der er geradlinig in Richtung des Doppelpfeiles A aus der in Fig. 2 dargestellten Befüllposition in eine Position verschiebbar ist, in der er die Oberseite des Brühzylinders 7 freigibt.

Zusammen mit dem Deckel 8 ist um die Schwenkachse 9 in Richtung des Doppelpfeiles B ein Mitnehmer in Form eines abgekröpften bzw. gekrümmten Armes 15 mit freiem Ende 15a schwenkbar gelagert. Der Arm 15 und der Deckel 8 sind fest miteinander verbunden, so daß sich ihre Relativlage zueinander nicht ändert und der Arm 15 immer zusammen mit dem Deckel 8 verschwenkt wird.

An der Einfülleinrichtung 13 ist eine Anschlagfläche 16 für das freie Ende 15a des Armes 15 vorgesehen. Zweckmäßigerweise ist die Anschlagfläche 16 die rückwärtige Seite eines fest mit der Einfülleinrichtung 13 verbundenen Abstreifers 17 für den verbrauchten Kaffeesatz.

Die der Anschlagfläche 16 abgewandte Vorderseite des Abstreifers ist als weitere Anschlagfläche 18 ausgebildet, an der der Deckel 8 mit seiner rückwärtigen Fläche 19 anschlägt, wenn sich der Deckel 8 auf die Einfülleinrichtung 13 zubewegt.

Der Betrieb der Brüheinrichtung 6 wird nachfolgend beschrieben.

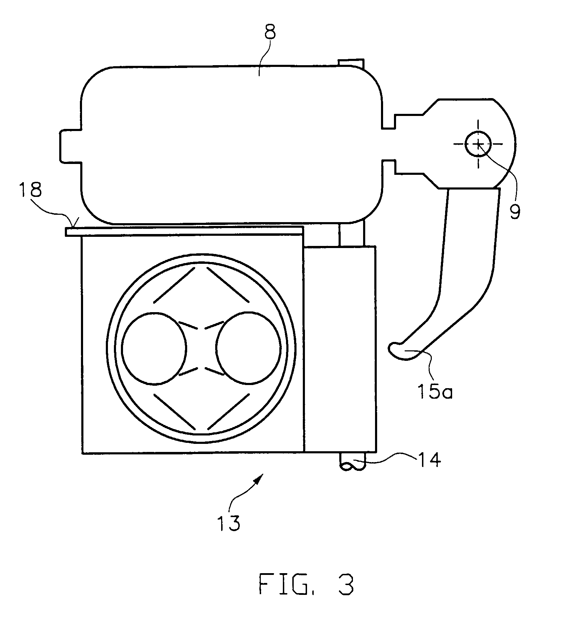

In Fig. 2 befindet sich der Einfülltrichter 12 direkt oberhalb des Brühzylinders 7, so daß über die Dosiereinrichtung 11 eine vorbestimmte Menge Kaffeemehl in den Brühzylinder 7 eindosiert werden kann. Dann wird der Motor 10 in Betrieb gesetzt und bewegt den Deckel 8 in die in Fig. 3 dargestellte Schließposition, in der der Deckel 8 die obere Stirnseite des Brühzylinders 7 annähernd druckdicht verschließt. Während der Bewegung in die Schließ- bzw. Brühposition der Fig. 3 kommt zunächst das freie Ende 15a von der Anschlagfläche 16 frei und anschließend schlägt der Deckel 8 mit seiner Fläche 19 an der Anschlagfläche 18 der Einfülleinrichtung 13 an und schiebt den Einfülltrichter 12 auf der Führungsstange 14 in die in Fig. 3 gezeigte Position unmittelbar neben dem Brühzylinder, wo er in Anlage am Deckel 8 verbleibt und somit nicht zu viel Platz beansprucht. Dann wird Kaffee gebrüht.

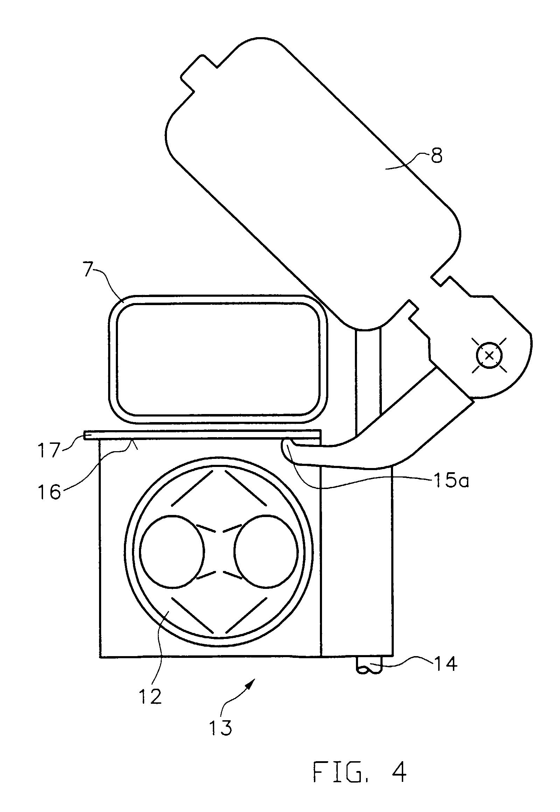

Nach dem Ende des Brühvorganges wird wiederum der Motor 10 in Gang gesetzt und verschwenkt zunächst allein den Deckel 8 in Gegenrichtung, bis die gesamte obere Öffnung des Brühzylinders 7, wie in Fig. 4 dargestellt, freiliegt. Durch diesen längeren Bewegungsweg des Deckels 8 und dessen vorverlagerten Zeitpunkt des Bewegungsbeginns kann Restdampf aus dem Brühzylinder 7 entweichen, so daß er sich nicht am Einfülltrichter niederschlagen kann. Diese Zeit kann darüber hinaus genutzt werden, um mit Hilfe des (nicht gezeichneten) Kolbens den verbrauchten Kaffeesatzkuchen nach oben aus dem Brühzylinder 7 herauszuschieben.

Erst in der Stellung gemäß Fig. 4, die etwa einer Winkelbewegung des Deckels 8 um etwa 45° entspricht, gelangt das freie Ende 15a an der ersten Anschlagfläche 16 in Anschlag und nimmt bei einer weiteren Verschwenkbewegung des Deckels 8 bis zur Einwurfposition in Fig. 2, d.h. über einen Gesamtverschwenkwinkel von ca. 97°, die Einfülleinrichtung 13 mit dem Einfülltrichter 12 und dem Abstreifer 17 mit. Dadurch wird der Abstreifer 17 über den Brühzylinder 7 bewegt und wirft den Kaffeesatzkuchen aus. Unmittelbar nachfolgend wird dann der Einfülltrichter 12 über den Brühzylinder 7 bewegt, so daß die Kaffeemaschine, in der Stellung gemäß Fig. 2, für einen neuen Einfüllvorgang von Kaffeemehl bereit ist. Die Rückbewegung des Deckels 8 in Schließposition kann bereits kurz vor dem Ende des Einfüllvorgangs beginnen.

In Abwandlung des beschriebenen und gezeichneten Ausführungsbeispiels können die Form und die Anordnung der Bauteile an die spezielle Konstruktion der Kaffeemaschine angepaßt werden. So muß beispielsweise der Mitnehmer nicht unbedingt als Arm ausgebildet sein. Auch die Form seiner Abkröpfung bzw. Krümmung kann, je nach den Abmessungen und der gewünschten Art und Weise der Bewegungskoppelung, insbesonder je nach dem gewünschten Zeitpunkt, ab wann die Bewegungen von Deckel und Einfülltrichter ge- bzw. entkoppelt werden sollen, verändert werden. Die Bewegungskoppelung ist ebenfalls möglich, wenn beispielsweise der Einfülltrichter sich auch auf einer Kreisbahn oder der Deckel sich auf einer geradlinigen Bahn bewegen. Auch der Verschwenkwinkel des Deckels bzw. die Bewegungswege können gemäß den Erfordernissen abgewandelt werden. Zur Rückführung des Einfülltrichters kann weiterhin eine zweite Anschlagfläche für den Mitnehmer vorgesehen sein, die in einem die Relativbewegung zwischen Deckel und Einfülltrichter bestimmenden Abstand zur ersten Anschlagfläche angeordnet ist.

## Patentansprüche

1. Kaffeemaschine, mit einer Brüheinrichtung, die eine durch einen bewegbaren Dekkel verschließbare Brühkammer und eine mit dem Deckel verbundene Einfülleinrichtung für Kaffeemehl aufweist, **dadurch gekennzeichnet,** daß die Einfülleinrichtung (13) mit dem Deckel (8) durch eine Übertragungseinrichtung (15, 16, 18, 19) bewegungsgekoppelt ist, die eine begrenzte Relativbewegung zwischen der Einfülleinrichtung (13) und dem Deckel (8) zuläßt.

2. Kaffeemaschine nach Anspruch 1, **dadurch gekennzeichnet,** daß die Übertragungseinrichtung einen Mitnehmer (15) und wenigstens eine Anschlagfläche (16) aufweist.

3. Kaffeemaschine nach Anspruch 1, **dadurch gekennzeichnet,** daß der Deckel (8) und die Einfülleinrichtung (13) bezüglich ihrer Bewegungsbahnrichtung relativ zueinander bewegbar sind.

4. Kaffeemaschine nach einem der Ansprüche 1 bis 3, **dadurch gekennzeichnet,** daß der Deckel (8) und die Einfülleinrichtung (13) bezüglich ihrer Bewegungsweglänge relativ zueinander bewegbar sind.

5. Kaffeemaschine nach einem der Ansprüche 1 bis 4, **dadurch gekennzeichnet,** daß der Deckel (8) und die Einfülleinrichtung (13) bezüglich ihres Bewegungszeitpunktes relativ zueinander bewegbar sind.

6. Kaffeemaschine nach einem der Ansprüche 1 bis 5, **dadurch gekennzeichnet,** daß der Deckel (8) angetrieben und um eine Achse (9) auf einer Kreisbahn verschwenkbar und die Einfülleinrichtung (13) in einer geradlinigen Führung (14) verschiebbar sowie durch die Übertragungseinrichtung (15, 16) bei der angetriebenen Bewegung des Deckels (8) mitnehmbar ist.

7. Kaffeemaschine nach einem der Ansprüche 2 bis 6, **dadurch gekennzeichnet,** daß der Mitnehmer (15) am Deckel (8) und die Anschlagfläche (16) an der Einfülleinrichtung (13) vorgesehen ist.

8. Kaffeemaschine nach Anspruch 6 oder 7, **dadurch gekennzeichnet,** daß der Mitnehmer ein mit einem Eingriffsende (15a) versehener Arm (15) ist, der auf der Schwenkachse (9) des Deckels (8) sitzt.

9. Kaffeemaschine nach einem der Ansprüche 2 bis 8, **dadurch gekennzeichnet,** daß der Deckel (8) hin- und herverschwenkbar ist und daß die Übertragungseinrichtung (13) einen zweiten Anschlag (18, 19) aufweist.

10. Kaffeemaschine nach Anspruch 9, **dadurch gekennzeichnet,** daß der zweite Anschlag (18, 19) zwischen dem Deckel (8) und der Einfülleinrichtung (13) direkt vorgesehen ist, so daß die Einfülleinrichtung (13) durch den Deckel (8) verdrängbar ist.

11. Kaffeemaschine nach einem der Ansprüche 1 bis 10, **dadurch gekennzeichnet,** daß mit der Einfülleinrichtung (13) ein Abstreifer (17) bewegungsfolgend verbunden ist.

12. Kaffeemaschine nach einem der Ansprüche 1 bis 10, **dadurch gekennzeichnet,** daß der Deckel (8) um eine Achse (9) aus einer Einfüll- in eine Schließposition hin- und hergehend verschwenkbar angetrieben ist, daß die Einfülleinrichtung (13) auf einer geradlinigen Führung (14) hin- und hergehend bewegbar ist, daß die Übertragungseinrichtung einen fest mit dem Deckel (8) verbundenen Mitnehmerarm (15) und eine erste und eine zweite Anschlagfläche (16, 18) an der Einfülleinrichtung (13) aufweist, wobei die erste Anschlagfläche (16) derart im Bewegungsweg des Mitnehmers (15) bei der Hinbewegung des Deckels (8) angeordnet ist, daß der Mitnehmer (15) erst nach einer Schwenkbewegung des Deckels (8) um einen vorbestimmten Winkelbetrag an der ersten Anschlagfläche (16) mitnehmend anschlägt, und wobei die zweite Anschlagfläche (18) derart im Bewegungsweg des Deckels (8) bei seiner Herbewegung angeordnet ist, daß die Einfülleinrichtung (13) erst nach einer Bewegung des Deckels (8) um einen vorbestimmten Winkelbetrag vom Deckel (8) mitnehmbar ist.
